# EUROPEAN PATENT APPLICATION

(11) **EP 1 453 179 A2**
(43) Date of publication of application: **01.09.2004**
(21) Application number: 03015619.4
(22) Date of filing: 16.07.2003
(51) Int. Cl.: H02K 1/14

(54) **Method of assembling an electric motor**

(30) Priority: 27.02.2003 KR 2003012461
(71) Applicant: LG ELECTRONICS INC., Seoul (KR)
(72) Inventor: Park, Jin-Soo, Namdong-Gu, Incheon (KR); Kim, Byung-Taek, Gyeonggi-Do (KR)
(74) Representative: Gille Hrabal Struck Neidlein Prop Roos

(57) **Abstract**

A stator assembly of a motor comprises a plurality of yokes fabricated by laminating a plurality of steel plate sheets having predetermined length; a plurality of poles coupled between the yokes and fabricated by molding magnetic material using a mold; and a plurality of bobbin bodies, on which coil for generating induced magnetism is wound, covered on outer portions of the poles, and the yoke is fabricated by laminating a plurality of steel plate sheets and the pole and the bobbin body are fabricated in a powder metallurgy method to reduce the material cost and to improve a function of the motor.

## Description

### BACKGROUND OF THE INVENTION

### 1. Field of the Invention

The present invention relates to a stator of a motor, and particularly, to a motor stator assembly and a fabrication method thereof for fabricating a yoke by laminating a plurality of steel plate sheets and fabricating a pole in a powder metallurgy method.

### 2. Description of the Background Art

Generally, most of electric appliances use a motor as a driving source. The motor comprises a stator assembly for winding and fixing coil , and a mover assembly positioned inside or outside of the stator assembly and rotated by induction magnetic field for transmitting a driving force.

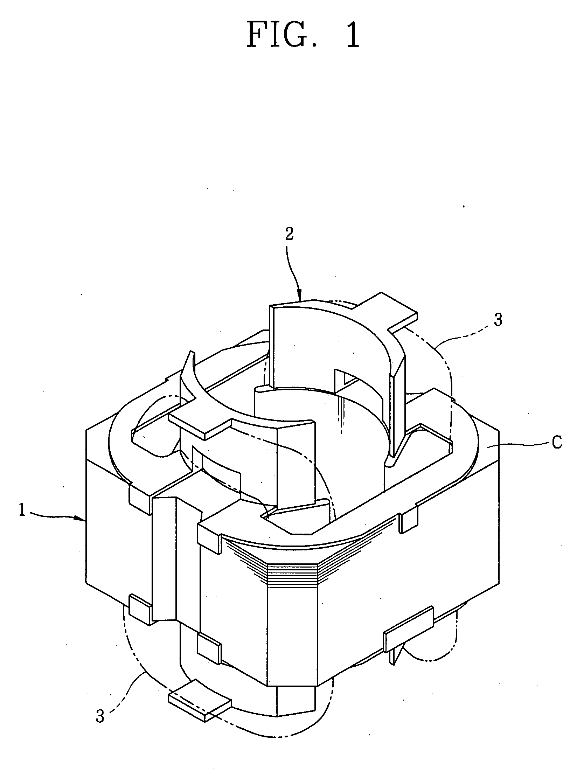

Figure 1 is a perspective view showing a stator assembly manufactured by a lamination method in accordance with the conventional art.

As shown, the stator assembly comprises: a stator core 1 formed by laminating a plurality of sheets C which are fabricated by blanking steel with a predetermined shape; an insulator 2 installed in the stator core 1; and a coil 3 wound outside of the insulator 2 for forming induction current.

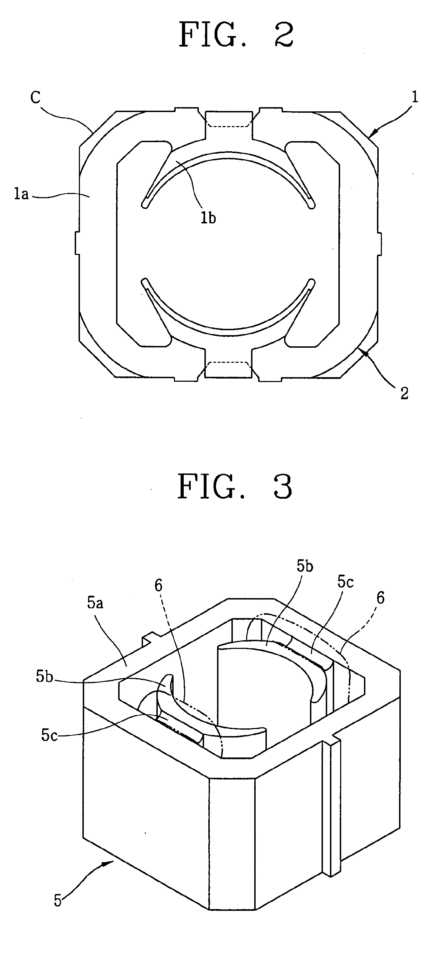

As shown in Figure 2, the sheets C constituting the stator core 1 includes a yoke 1 a formed as a quadrangle shape for forming a magnetic path; and a pole 1b formed integrally with the yoke 1 a as a circular arc shape at both sides of an inner circumference surface of the yoke 1a, on which the coil 3 is wound.

The insulator 2 is attached to a part where the yoke 1 a and the pole 1 b are connected to each other, and is formed with insulating material such as plastic or rubber for insulating between the coil 3 and the stator core 1.

However, in the stator assembly of a lamination method, an amount of scrap loss which is discarded at the time of blanking for fabricating the stator core is more than 35% ,and accordingly, loss of material is generated.

Also, since a protector manufactured by injection molding, is inserted between the stator core and the coil, a radius of a part where coil is wound increases, which result in cost rise, a winding resistance is increased, and thus a motor efficiency is decreased.

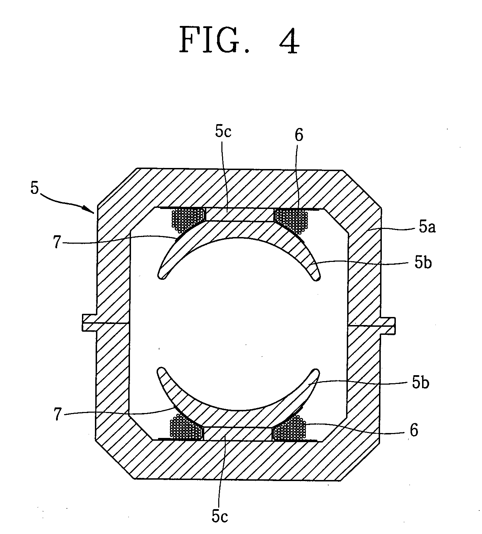

To solve the above problems, as shown in Figures 3 and 4, the stator assembly of powder metallurgy method comprises: a frame 5 formed by inputting magnetic powder material into a metal mold of a predetermined shape, applying a predetermined pressure, and heating with a predetermined temperature; and a coil 6 wound on a winding groove 5c of the frame 5 for generating induction magnetism.

The frame 5 includes a yoke 5a formed as a closed curve of a quadrangle shape for forming a magnetic path; and a pole 5b formed integrally with the yoke 5a as a circular arc shape at both sides of an inner circumference surface of the yoke 5a.

A neck portion of the winding groove 5c is provided in order to reduce an amount of the coil 6, and an edge of the winding groove 5c is formed as a curved line in order to prevent coating of the coil 6 from falling off when the coil 6 is wound.

Also, an insulator 7 for insulating the coil 6 from the pole 5b is attached to an outer side of the pole 5b and the winding groove 5c and an inner side of the yoke 5a which are contacted with the coil 6.

However, the powder metallurgy method has a disadvantage that a magnetic permeability of magnetic powder and core loss characteristic are lower than silicon steel used in the lamination method and material cost is expensive.

Herein, the magnetic permeability is called as magnetic inductive capacity, which means a ratio between magnetic flux density generated at the time of magnetization by magnetic field and intensity of the magnetic field in a vacuum state.

Also, the core loss characteristic means loss generated by steel in a unit volume, and silicon steel has more excellent core loss characteristic than iron powder. That is, since the silicon steel has more excellent magnetic flux density than the iron powder, the motor efficiency is relatively better.

In the powder metallurgy method, the frame is formed by using the metal mold thus to have an easy fabricating process, the winding groove is formed at the neck portion of the pole thus to reduce consumption amount of the coil, and the curved line is formed at the winding groove thus to prevent the coil from falling off at the time of being wound. However, cost of the magnetic powder is considerably expensive than the silicon steel.

Also, since the magnetic powder has low permeability and the core loss characteristic than the silicon steel, a frame of a larger volume is required in order to obtain the same effect with a motor using the conventional silicon steel, thereby increasing material cost.

### SUMMARY OF THE INVENTION

Therefore, an object of the present invention is to provide a motor stator assembly and a fabrication method thereof for fabricating a yoke by laminating a plurality of steel platesheets and to fabricate a pole and a bobbin body by a powder metallurgy method thereby reducing required material cost and enhancing a motor performance.

To achieve the object of the purpose of the present invention, as embodied and broadly described herein, there is provided a stator assembly of a motor comprising: a plurality of yokes fabricated by laminating a plurality of steel platesheets a having predetermined length; a plurality of poles engaged between the yokes and formed by molding magnetic material in a mold; and a plurality of bobbin bodies, on which a coil for generating induced magnetism is wound, covered on outer portions of the poles.

Also, to achieve the object of the present invention, there is provided a fabrication method of a stator assembly of a motor comprising: the steps of a first step for making a plurality of yoke plates by blanking a steel plate of a predetermined shape; a second step for making yokes by laminating the yoke plates; a third step for filling iron powder material in a predetermined mold; a fourth step for making a pole by compressing and heating the filled iron powder material in predetermined pressure and temperature; a fifth step for making a bobbin body insertable into an outer circumferential surface of the pole by injecting insulating material into a predetermined mold; a sixth step for inserting the pole into the bobbin body; and a seventh step for coupling the yokes into right and left ends of the pole by press-fitting the yoke.

Also, there is provided a fabrication method of a stator assembly of a motor comprising the steps of: a first step of making a plurality of yoke plates by blanking a steel plate of a predetermined shape; a second step of making a yoke by laminating the yoke plates layer by layer; a third step of making a bobbin body by injecting an insulating material into a predetermined mold; a fourth step of putting the bobbin body in the mold and filling iron powder in the bobbin body; a fifth step of making a pole in the bobbin body by compressing and heating the filled iron powder in predetermined pressure and temperature; and a sixth step of coupling the yoke onto both ends of the pole on which the bobbin body is covered.

Also, there is provided a manufacturing method of a stator assembly comprising the steps of: a first step of making a plurality of yoke plates by blanking a steel plate of predetermined shape; a second step of making a yoke by laminating the yoke plates layer by layer; a third step of making a bobbin body by injecting an insulating material in a predetermined mold; a fourth step of arranging the yoke and the bobbin body in a predetermined mold; a fifth step of filling iron powder in the bobbin body; and a sixth step of molding a pole by compressing and heating the filled iron powder and coupling the pole and the yoke integrally with each other.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 is a perspective view showing a stator assembly fabricated by a laminating method in accordance with the conventional are;
Figure 2 is a plane view showing a stator assembly fabricated by a laminating method in accordance with the conventional art;
Figure 3 is a perspective view showing a stator assembly in a powder metallurgy method in accordance with the conventional art;
Figure 4 is a cross-sectional view showing the stator assembly in the powder metallurgy method in accordance with the conventional art;
Figure 5 is a perspective view showing a stator assembly of a motor according to the present invention;
Figure 6 is a cross-sectional view showing the stator assembly of the motor according to the present invention;
Figures 7 through 9 are expanded views showing part A shown in Figure 6 representing a coupled structure between a connecting material and a yoke of the stator assembly according to the present invention;
Figure 10 is a upper view showing steel plates according to the fabrication method of the present invention;
Figure 11 is a brief view showing an example of winding coil on the plurality of bobbin bodies according to the present invention; and
Figures 12a through 12d are processing views illustrating fabrication method of the stator assembly of the motor according to the present invention.

### DETAILED DESCRIPTION OF THE PREFERRED EMBODIMENTS

Reference will now be made in detail to the preferred embodiments of the present invention, examples of which are illustrated in the accompanying drawings.

There may be a plurality of embodiments for a stator assembly of a motor and fabrication method thereof according to the present invention, and the most preferred embodiment will be described as follows.

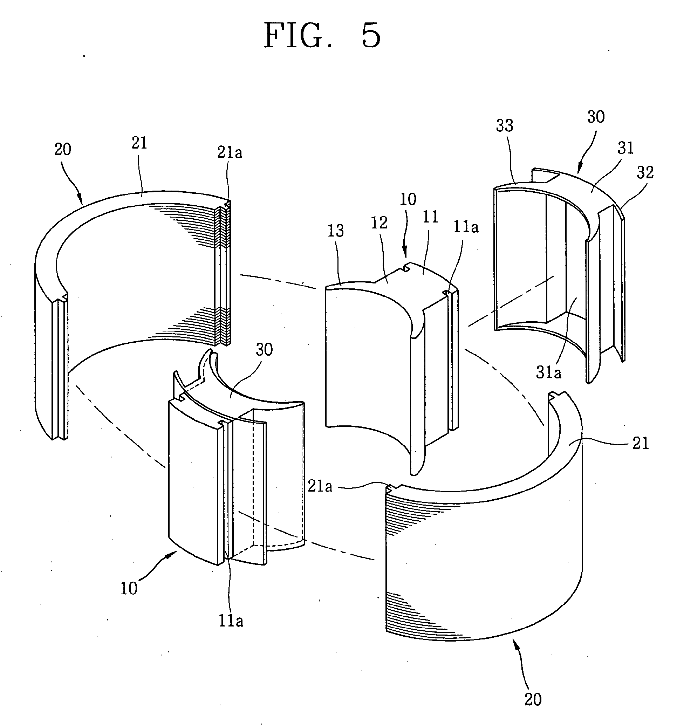

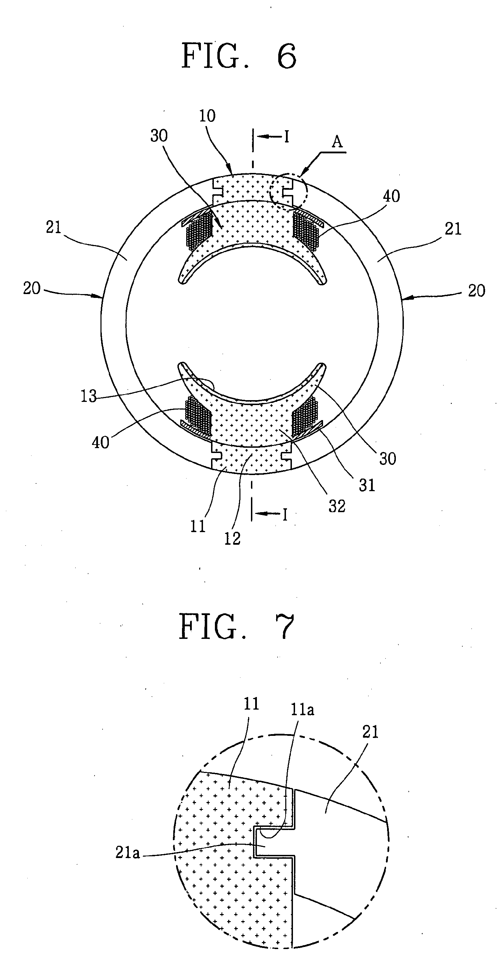

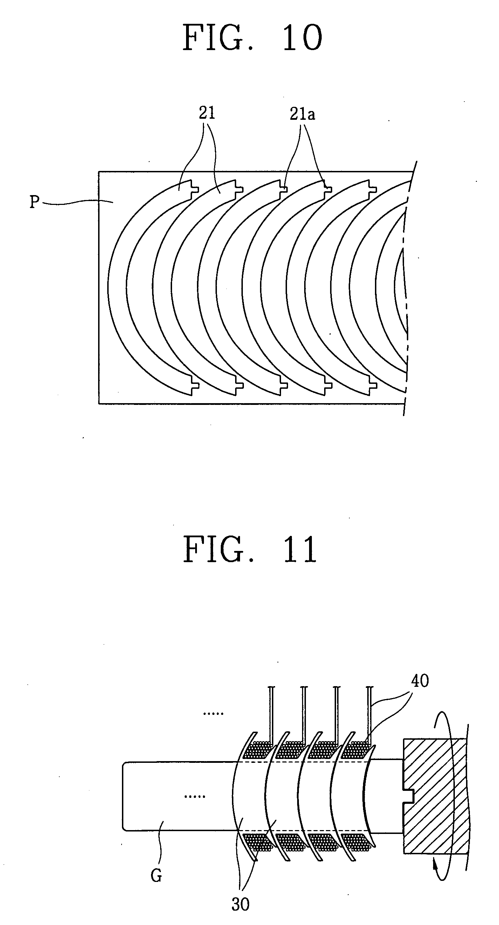

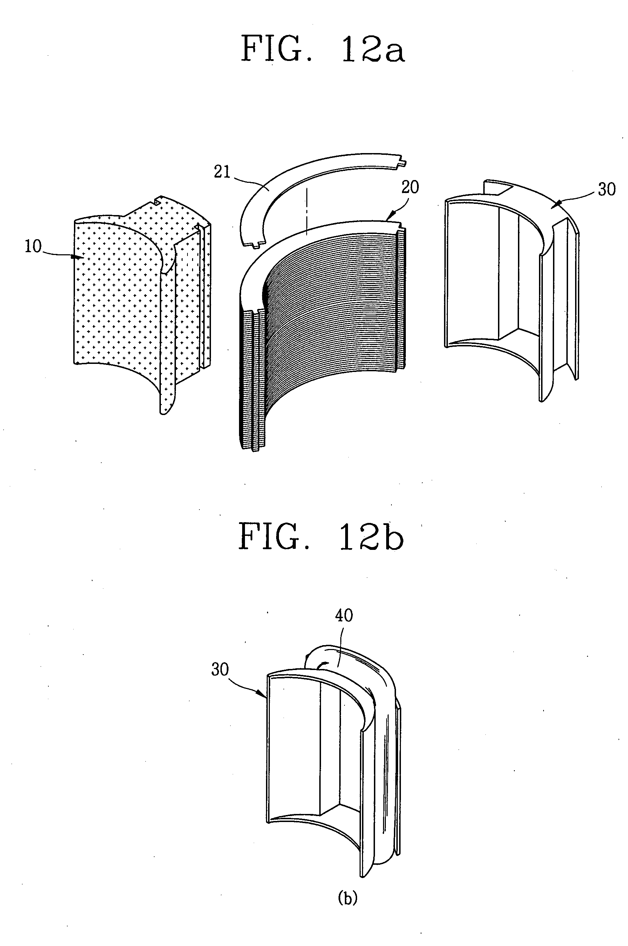

Figure 5 is a perspective view showing a disassembled stator assembly of a motor according to the present invention, Figure 6 is a cross-sectional view showing the stator assembly according to the present invention, Figures 7 through 9 are expanded views of part A in Figure 6 showing coupled structure between a connecting body and a yoke of the stator assembly according to the present invention, Figure 10 is a top view showing steel plates according to the manufacturing method of the present invention; Figure 11 is a brief view showing an example of winding coil on the plurality of bobbin bodies according to the present invention; and Figures 12a through 12d are processing views illustrating fabrication method of the stator assembly of the motor according to the present invention.

As shown in Figure 5, the stator assembly of the motor according to the present invention comprises a plurality of yokes 20 fabricated by laminating a plurality of steel plate sheets having a predetermined length; a plurality of poles 10 coupled between the yokes 20 and made by molding magnetic material using a mold; and a plurality of bobbin bodies 30, on which coils for generating induced magnetism are wound, covered on outer part of the poles 10.

The pole 10 comprises a guide portion 13 of arc shape for gathering flux on inner part thereof, and the guide portion 13 is disposed to form a magnetic path apart from a rotor which is inserted inside of the stator.

A neck portion 12, to which the bobbin body 30 is mounted, is formed on a rear surface of the guide portion 13 as integrally connected with the guide portion 13, and length and height of the neck portion 12 are formed to be shorter than those of the guide portion 13 so as to be inserted into the bobbin body 30.

The connecting portion 11 of circular arc shape is formed on a rear surface of the neck portion 12 to have predetermined height and width, and a connecting groove 11a is disposed on each side of the connecting portion 11 so that the yoke 21 can be coupled thereto.

It is desirable that the pole 10 is formed using iron powder.

The bobbin body 30 comprises an inner wing 33 attached on an outer part of the guide portion 13 of the pole 10, a body 31 connected to the inner wing 33 and mounted on the neck portion 12 of the pole 10, the body 31 being wound by the coil 40, and an outer wing 32 protruded toward each side of the body 31 to cover the coil 40.

The inner wing 33 is formed to be a similar circular arc shape with the guide portion 13, and it is desirable that a space is formed inside of the inner wing 33 so that the guide portion 13 can be inserted thereto.

The body 31 includes a penetrating hole 31 a of a same shape as that of the neck portion 12 so that the neck portion 12 can be inserted therein, and the coil 40 generating the induced magnetism is predetermined times wound on outer portion of the body 31.

Herein, a winding recess is formed on outer portion of the body 31 so that the coil 40 can be wound a plurality of times, and it is desirable that the edges of the body 31 are formed to be round so that a covering of the coil 40 is not be taken off when the coil 40 is wound.

The outer wing 32 is protruded on each side of the body 31 in a circumferential direction for insulating the coil 40 from the yoke 20, and is formed to have same height as that of the yoke 20.

In addition, the outer wing 32 prevents the coil 40 wound on the body 31 from being escaped out of the bobbin body 30 and gathers the coil 40.

It is desirable that the bobbin body 30 is formed by an insulating material for insulating the coil 40 with the pole 10, and it is desirable that the insulating material is epoxy.

It is desirable that the yoke 20 is formed by laminating a plurality of yoke plates 31 coupled between two different connecting portions 11 and having a predetermined radius of curvature as high as the height of connecting portion.

Also, the yoke plate 21 is fabricated by silicon steel (Si-steel) having higher magnetic permeability and core loss characteristic.

Herein, the magnetic permeability is called as magnetic inductive capacity, which means a ratio between magnetic flux density generated at the time of magnetization by magnetic field and intensity of the magnetic field in a vacuum state. In addition, the core loss characteristic means loss generated by steel in a unit volume, and silicon steel has more excellent core loss characteristic than iron powder. That is, since the silicon steel has more excellent magnetic flux density than the iron powder, the motor efficiency is relatively better.

It is desirable that a connecting projection 21 a and a connecting groove 11a for connecting the yoke 21 and the connecting portion 11 are formed between the yoke 21 and the connecting portion 11 as high as the height of yoke 21 and the connecting portion 11.

As shown in Figure 7, the connecting projection 21 a of the yoke plate 21 is protruded as a square shape and coupled to the connecting groove 11 a of the connecting portion 11 which is grooved as a square shape so as not to separate the yoke plate 21 from with the connecting portion 11.

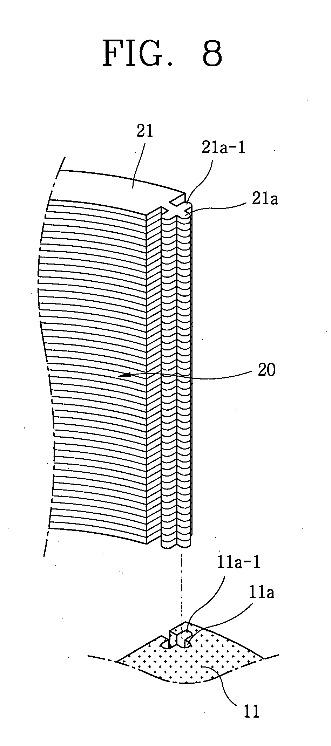

As shown in Figure 8, it is desirable that the connecting projection 21a of the yoke plate 21 is formed to be long and stopping jaws 21 a-1 of same shape are respectively formed on both sides of the connecting projection 21 a in order to prevent the yoke plate 21 from being escaped from the connecting portion and coupled to a stopping groove 11a-1 of the connecting portion 11 corresponding to the stopping jaws 21a-1.

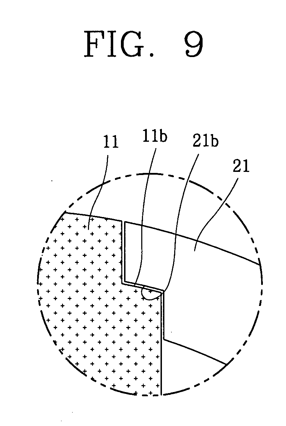

As shown in Figure 9, it is desirable that stepped projections 21b of square shape are respectively formed on both ends of the yoke plate 21 to be coupled to stepped projections 11 b of square shape formed on both ends of the connecting portion 1.1 corresponding thereto.

A fabrication method of the stator assembly in the motor according to the present invention will be described as follows.

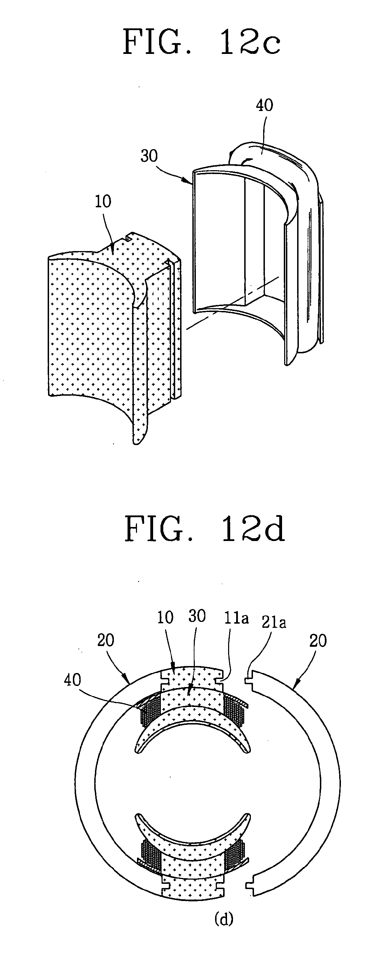

Figure 12 is illustrating the fabricating processes.

First, the plurality of yoke plates 21 are made by blanking thin Si-steel having a thickness less than 1 mm, and the yoke 20 is fabricated by laminating the yoke plates 21.

In addition, the iron powder is filled in a predetermined mold, and the filled iron powder is compressed and heated in predetermined pressure and temperature to make the pole 10.

Also, the bobbin body 30 which can be inserted to the outer circumferential surface of the pole 10 is fabricated by injecting the insulating material into a predetermined mold, and the pole 10 is inserted into the bobbin body 30 and the yokes 20 are press-fitted into left and right ends of the pole 10 to couple them.

Herein, the coil 40 may be wound on the outer circumferential surface of the bobbin body 30 before the bobbin body 30 is inserted into the pole 10. And at that time, the plurality of bobbin bodies 30 are inserted into a winder G sequentially as shown in Figure 11, and therefore, the coil 40 can be wound on the plurality of bobbin bodies 30 at the same time.

Also, the coil 40 may be wound on the outer circumferential surface of the bobbin body 30 after inserting the bobbin body 30 into the pole 10. And at that time, deformation of the bobbin body 30 which may be generated due to the tension of the coil 40 when the coil 40 is wound on the bobbin body 30 can be prevented.

Hereinafter, another embodiment of the fabrication method according to the present invention will be described.

First, a plurality of yoke plates 21 are made by blanking the Si-steel having thin thickness smaller than 1mm, and the yoke 20 is fabricated by laminating the yoke plates 21 layer by layer.

Next, the bobbin body 30 is fabricated by injecting the insulating material into a predetermined mold, and then, the bobbin body 30 is put into the mold and the iron powder is filled in the bobbin body 30.

The filled iron powder is compressed and heated in. predetermined pressure and temperature to make the pole 10 in the bobbin body 30, and the yoke 20 is coupled to both ends of the pole 10 on which the bobbin body 30 is covered.

At that time, a step of winding the coil 40 on the outer circumferential surface of the bobbin body 30 can be included before forming the pole 10 in the bobbin body 30, and at that time, the plurality of bobbin bodies 30 can be inserted into the winder G sequentially and the coil 40 can be wound on the several bobbin bodies 30 at one time.

Also, the step of winding coil 40 on the outer circumferential surface of the bobbin body 30 can be disposed after forming the pole 10 in the bobbin body 30, and then, the deformation of the bobbin body 30 which may be generated by the tension of the coil 40 when the coil 40 is wound on the bobbin body 30 can be prevented.

Hereinafter, still another embodiment of the present invention will be described as follows.

First, a plurality of yoke plates 21 are fabricated by blanking the Si-steel having thin thickness smaller than 1mm, and the yoke 20 is fabricated by laminating the yoke plates 21 layer by layer.

Next, the bobbin body 30 is fabricated by injecting the insulating material into a predetermined mold, and the yoke 20 and the bobbin body 30 are arranged on a predetermined mold.

In addition, the iron powder is filled in the bobbin body 30, and the filled iron powder is compressed and heated in predetermined pressure and temperature to form the pole 10, and then, the pole 10 and the yoke 20 installed in the mold are coupled integrally with each other.

Then, the mold is removed to complete the product.

At that time, the coil may be wound on the outer circumferential surface of the bobbin body 30 before arranging the yoke and the bobbin body in the mold , and at that time, a plurality of bobbin bodies 30 can be inserted into the winder G sequentially and the coil 40 can be wound on the several bobbin bodies 30 at the same time.

Also, the coil may be wound on the outer circumferential surface of the bobbin body after coupling the formed pole is coupled with the yoke and removing the mold, then, the deformation of the bobbin body 30 which may be generated by the tension of the coil 40 when the coil 40 is wound on the bobbin body 30 can be prevented.

Meanwhile, as shown in Figure 10, in the step of fabricating the yoke plate 21, the Si-steel having a predetermined length and width is treated at once using a punching device in which a plurality of punches are connected to form the plurality of yoke plates 21.

Therefore, the processing time can be greatly reduced when comparing to the case that the yoke plate 21 is fabricated with a punch one by one.

Also, in the step of fabricating the pole, a curing operation is performed for the iron powder material in a temperature about 300 ∼ 500°C after pressing the iron powder to couple the iron powder with each other, and then, the pole is fabricated.

Herein, the curing operation is different from a sintering operation. That is, the sintering operation compresses the powder and heats the powder with the temperature similar to the melting point to couple the powder. At that time, the powder is coupled with very high temperature and the property of the material may be changed.

On the contrary, the curing operation compresses the powder and heats the powder in temperature of 300 ∼ 500°C, and the property of the material is not changed because it is heated by relatively lower temperature than that of the sintering operation.

Effects of the stator assembly of a motor and the fabrication method thereof according to the present invention will be described as follows.

According to the present invention, the pole is fabricated using the iron powder material, however, the yoke is fabricated using the Si-steel having lower price than that of the iron steel and having higher magnetic permeability and core loss characteristic. Therefore, the lowering of motor function can be prevented effectively per same volume, and accordingly, the rising of the material cost due to the large motor can be prevented.

Also, the yoke plates are fabricated in blanking process using a plurality of punches, and therefore, the processing time can be reduced and the amount of scrap loss can be reduced. Thereby, the producing cost can be reduced.

Also, in case that the bobbin body is separately formed and the coil is wound on the bobbin body in advance before other processes, the coil can be wound on the bobbin body densely and the entire length of the coil can be greatly reduced. And accordingly, the used amount of the coil can be reduced to 50% of the conventional art, and therefore, the producing cost can be reduced and the winding time of the coil is reduced to improve the productivity.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A stator assembly of a motor comprising:
a plurality of yokes fabricated by laminating a plurality of steel plate sheets having predetermined length;
a plurality of poles coupled between the yokes and fabricated by molding magnetic material using a mold; and
a plurality of bobbin bodies, on which coil for generating induced magnetism is wound, covered on outer portions of the poles.

2. The assembly of claim 1, wherein the pole comprises:
a guide portion of circular arc shape for gathering magnetic flux;
a neck portion, on which the bobbin body is mounted, connected to a rear surface of the guide portion; and
a connecting portion formed on a rear surface of the neck portion and coupled to the yoke.

3. The assembly of claim 1, wherein the pole is molded by using iron powder.

4. The assembly of claim 2, wherein the guide portion having an inner surface of a circular arc shape which guides a rotor to gather the magnetic flux onto the rotor.

5. The assembly of claim 2, wherein the neck portion has shorter length and lower height than those of the guide portion so as to be inserted into the bobbin body.

6. The assembly of claim 2, wherein the connecting portion is formed to have a circular arc shape having predetermined height and width, and to have connecting grooves on both sides thereof.

7. The assembly of claim 1, wherein the bobbin body comprises:
an inner wing attached on outer portion of the guide portion on the pole;
a body connected to the inner wing and mounted on the neck portion of the pole to be wound by the coil; and
an outer wing protruded toward each side of the body to cover the coil.

8. The assembly of claim 7, wherein the inner wing is formed to be a circular arc shape similarly to the guide portion and formed to have a space therein so that the guide portion can be inserted.

9. The assembly of claim 7, wherein the body includes a penetrating hole having same shape as that of the neck portion on inner side thereof so that the neck portion can be inserted therein, and a coil generating induced magnetism wound predetermined times on outer side thereof.

10. The assembly of claim 9, wherein the body includes a winding recess so that the coil can be wound on outer part thereof.

11. The assembly of claim 7, wherein the outer wing is protruded toward each side of the body in a circumferential surface for insulating between the coil and the yoke and is formed to have same height as that of the yoke.

12. The assembly of claim 1, wherein the bobbin body is formed by using insulating material for insulating the coil from the pole.

13. The assembly of claim 12, wherein the insulating material is epoxy.

14. The assembly of claim 1, wherein the yoke is formed by laminating a plurality of yoke plates coupled between two different connection portions and having a predetermined radius of curvature therein as high as the height of connecting portion.

15. The assembly of claim 6 or 14, wherein a connecting projection and a connecting groove for coupling the yoke and the connecting portion are formed between the yoke and the connecting portion as high as the height of the yoke and the connecting portion.

16. The assembly of claim 15, wherein the connecting projection is protruded as a square shape to be coupled to the connecting groove of the connecting portion hollowed as a square shape so as not to separate the yoke from the connecting portion.

17. The assembly of claim 15, wherein the connecting projection is formed to be long and has stopping jaws of same shape on both sides thereof to prevent the yoke from being escaped from the connecting portion and to be coupled to stopping grooves of the connecting portion having the shape corresponding to the stopping jaws.

18. The assembly of claim 1, wherein stepped projections of square shape are formed on both ends of the yoke and coupled to stepped projections of square shape formed on both ends of the connecting portion corresponding thereto.

19. A fabrication method of a stator assembly of a motor comprising the steps of:
a first step of making a plurality of yoke plates by blanking a steel plate of a predetermined shape;
a second step of making a yoke by laminating the yoke plates layer by layer;
a third step of filling iron powder material in a predetermined mold;
a fourth step of making a pole by compressing and heating the filled iron powder in predetermined pressure and temperature;
a fifth step of making a bobbin body which can be inserted into the outer circumferential surface of the pole by injecting an insulating material into a predetermined mold;
a sixth step of inserting the pole into the bobbin body; and
a seventh step of press-fitting the yoke into left and right ends of the pole to couple the yoke and the pole.

20. The method of claim 19, further comprising a step of winding a coil on an outer circumferential surface of the bobbin body before inserting the bobbin body into the pole between the fifth and sixth steps.

21. The method of claim 19, further comprising a step of winding coil on the outer circumferential surface of the bobbin body after inserting the bobbin body into the pole between the fifth and sixth steps.

22. A fabrication method of a stator assembly of a motor comprising the steps of:
a first step of making a plurality of yoke plates by blanking a steel plate of a predetermined shape;
a second step of making a yoke by laminating the yoke plates layer by layer;
a third step of making a bobbin body by injecting an insulating material into a predetermined mold;
a fourth step of putting the bobbin body in the mold and filling iron powder in the bobbin body;
a fifth step of making a pole in the bobbin body by compressing and heating the filled iron powder in predetermined pressure and temperature; and
a sixth step of coupling the yoke onto each end of the pole on which the bobbin body is covered.

23. The method of claim 22, further comprising a step of winding a coil on an outer circumferential surface of the bobbin body before forming the pole in the bobbin body between the fourth and fifth steps.

24. The method of claim 22, further comprising a step of winding coil on the outer circumferential surface of the bobbin body after forming the pole in the bobbin body between the fourth and fifth steps.

25. A fabrication method of a stator assembly of a motor comprising the steps of:
a first step of making a plurality of yoke plates by blanking a steel plate of predetermined shape;
a second step of making a yoke by laminating the yoke plates layer by layer;
a third step of making a bobbin body by injecting an insulating material in a predetermined mold;
a fourth step of arranging the yoke and the bobbin body in a predetermined mold;
a fifth step of filling iron powder in the bobbin body; and
a sixth step of molding a pole by compressing and heating the filled iron powder and coupling the pole and the yoke integrally with each other.

26. The method of claim 25, further comprising a step of winding a coil on an outer circumferential surface of the bobbin body before arranging the yoke and the bobbin body on the mold at the fourth step.

27. The method of claim 25, further comprising a step of winding a coil on an outer circumferential surface of the bobbin body after coupling the pole with the yoke in the bobbin body and removing the mold at the fourth step.

28. The method of claim 26, wherein the bobbin bodies are coupled to a winder sequentially and the coil is wound on the several bobbin bodies simultaneously as rotating the winder.

29. The method according to any one of claims 19 to 27, wherein the yoke is fabricated by laminating a plurality of yoke plates made by blanking the steel plate having predetermined length and width at one time.

30. The method of claim 25, wherein the pole is fabricated by curing the iron powder material in a temperature of 300 ∼ 500°C to couple the iron powder to each other after pressing the iron powder material.
